# EUROPÄISCHE PATENTSCHRIFT

(11) **EP 1 464 526 B1**
(45) Veröffentlichungstag und Bekanntmachung des Hinweises auf die Patenterteilung: **11.02.2009**
(21) Anmeldenummer: 04007941.0
(22) Anmeldetag: 01.04.2004
(51) Int. Cl.: B60J 10/00

(54) **Metallband als Einlage für Zier- oder Dichtstreifen**
Metallic insert band for trimming or sealing strips
Lame métallique d'insertion pour bandes d'enjolivement ou d'étanchéité

(30) Priorität: 01.04.2003 DE 10314821
(43) Veröffentlichungstag der Anmeldung: 06.10.2004
(73) Patentinhaber: BFC Büro- und Fahrzeugtechnik GmbH & Co. Prod. KG, 71686 Remseck (Aldingen) (DE)
(72) Erfinder: Neth, Walter, 70839 Gerlingen (DE)
(74) Vertreter: Manitz, Finsterwald & Partner GbR

(56) Entgegenhaltungen:
- EP-A- 0 252 659
- DE-A1- 3 743 970
- DE-U- 7 126 975
- FR-A- 2 657 292
- FR-A- 2 684 159
- US-A- 4 188 765
- US-A- 5 305 552

## Beschreibung

Die vorliegende Erfindung betrifft ein Metallband nach dem Oberbegriff von Anspruch 1.

Derartige Metallbänder werden insbesondere im Automobilbereich als Einlage für Dichtstreifen zum Abdichten von Motorraum-, Kofferraum- und Türöffnungen eingesetzt. Die kontinuierlich gefertigten Metallbänder sind mit Gummi und/oder flexiblem Kunststoff ummantelt und werden vor oder nach dem Ummanteln mit dem Dichtmaterial zu einem beispielsweise U-förmigen Klemmprofil gebogen, welches auf die Dichtflansche der Öffnung geklemmt wird. Es sind aber auch andere Formen wie S- oder L-Profile möglich. Um dabei den Konturen der Öffnung folgen zu können, muss das Klemmprofil meist in mehreren Ebenen flexibel sein. Zudem ist oft eine Stauchbarkeit in longitudinaler Richtung des Klemmprofils vorgesehen, da die abzudichtenden Öffnungen erhebliche Umfangstoleranzen aufweisen können und ein Ablängen des Dichtstreifens vor Ort äußerst aufwendig ist.

Diese Flexibilität und Stauchbarkeit des Klemmprofils wird durch Randdurchbrüche erreicht, die zumeist von beiden Rändern des Metallbands in Richtung auf die Bandmitte geführt sind. Dabei muss gewährleistet bleiben, dass das Band eine ausreichende Zugfestigkeit aufweist, da das Metallband beim Beschichten mit dem Dichtmaterial durch einen Extruder läuft, wobei erhebliche Kräfte in Längsrichtung des Bandes auftreten. Ein weiteres Erfordernis des Klemmprofils besteht darin, eine größtmögliche Klemmkraft auf die Dichtflansche auszuüben.

Um auch diesen Anforderungen zu genügen, weisen derartige Metallbänder oftmals sich in Längsrichtung des Bandes insbesondere kontinuierlich erstreckende Bereiche auf, in welchen keine Durchbrüche vorhanden sind. Da die üblicherweise verwendeten Gummi- und Kunststoffmaterialien zur Beschichtung des Metallbandes an Metall nicht haften, besteht das Problem, dass in den mehr oder weniger breiten Stegen ohne Durchbrüche das Band lose im Gummi- oder Kunststoffmaterial liegt, wenn nicht eine Beschichtung mit einem Haftvermittler vorgesehen ist. Beim Biegen des Profils um Radien kann dies zu unerwünschten Deformierungen führen. In den Bereichen mit Randdurchbrüchen besteht dieses Problem nicht, da das Gummi- oder Kunststoffmaterial die Randdurchbrüche penetrieren kann und dadurch am Metallband verankert ist. Dennoch müssen derartige Bänder daher mit Haftvermittler beschichtet werden, um eine ausreichende Verbindung mit dem Gummi- oder Kunststoffmaterial auch in den Stegen zu gewährleisten. Beschichtete Bänder sind aber verhältnismäßig teuer und haben relativ lange Lieferzeiten.

Ein Metallband gemäß dem Oberbegriff von Anspruch 1 ist aus der EP-A-0 252 659 bekannt.

Der Erfindung liegt die Aufgabe zugrunde, ein Metallband der eingangs genannten Art anzugeben, welches diese Nachteile nicht aufweist. Insbesondere soll ein kostengünstiges und schnell lieferbares Band angegeben werden, bei welchem eine ausreichende Verbindung zwischen Band und Gummi- oder Kunststoffmaterial gewährleistet ist.

Diese Aufgabe wird durch ein Metallband mit den Merkmalen von Anspruch 1 gelöst.

Durch das Vorsehen von zusätzlichen Durchbrüchen in den Bereichen ohne Randdurchbrüche, wobei die Durchbrüche jeweils ein solches Öffnungsmaß aufweisen, dass das flexible Material beim Umhüllen des Bandes hindurchdringen kann, wird eine Verankerung des flexiblen Materials am Metallband ohne Haftmittelbeschichtung ermöglicht. Die Inseldurchbrüche sind dabei bevorzugt in einer solchen Dichte vorgesehen, dass eine ausreichende Verankerung des flexiblen Materials in diesen Bereichen auch ohne Haftvermittler gewährleistet ist. Die Herstellung des Bandes ist dadurch kostengünstig möglich und die Lieferzeiten können verkürzt werden, da keine zeitaufwendige Haftmittelbeschichtung durchgeführt werden muss.

Die Inseldurchbrüche können insbesondere kreisförmig, rechteckig, quadratisch, oval oder linsenförmig ausgebildet sein. Grundsätzlich sind aber auch andere Querschnittsformen möglich.

Des Weiteren können die Inseldurchbrüche durch Ausstanzen gebildet sein. Dies ist kostengünstig möglich und führt wegen der geringen Größe der Inseldurchbrüche nur zu verhältnismäßig wenig Abfall. Zusätzlich wird durch das Ausstanzen das Gewicht des Bandes vorteilhafterweise reduziert.

Eine andere Möglichkeit besteht darin, die Inseldurchbrüche durch Schneiden von Schlitzen und Aufweiten der Schlitze durch Walzstrecken herzustellen. Dadurch entsteht vorteilhafterweise überhaut kein Abfall. Durch die Streckung ergibt sich auch hier eine Gewichtsreduzierung des Bandes pro Längeneinheit. Das Schneiden und Aufweiten kann zudem mit besonders hohen Maschinengeschwindigkeiten durchgeführt werden.

Das kleinste Öffnungsmaß der Inseldurchbrüche beträgt bevorzugt mindestens 0,4 mm. Hierdurch ist ein ausreichendes Penetrieren von flexiblem Material gewährleistet, um eine Verankerung des flexiblen Materials an dem Metallband sicherzustellen. Im Prinzip ist aber jedes Maß > 0 mm bis ca. 1,5 mm geeignet, so lange nur ein Penetrieren mit flexiblem Material gewährleistet ist.

Es können auch zwei oder mehr Reihen von Inseldurchbrüchen nebeneinander angeordnet sein. Dies ist insbesondere bei sehr breiten Stegbereichen vorteilhaft. Die Inseldurchbrüche können dann auch versetzt zueinander angeordnet sein.

Die erfindungsgemäßen Inseldurchbrüche können sowohl bei Bändern vorgesehen sein, bei denen der oder die Bereiche ohne Randdurchbrüche symmetrisch zur Mittellängsachse des Bandes angeordnet sind, als auch bei Bändern, bei denen diese Bereiche asymmetrisch angeordnet sind. In beiden Fällen werden die oben genannten Vorteile erzielt.

Zur Herstellung wird das Metallband bevorzugt in das flexible Material einextrudiert. Dies hat sich als besonders günstig herausgestellt. Ebenfalls günstig ist es, wenn aufgrund der erfindungsgemäßen Ausgestaltung des Metallbandes mit zusätzlichen Inseldurchbrüchen keine Beschichtung des Bandes mit einem Haftvermittler vorgesehen ist. Wie bereits dargelegt, können dadurch die Kosten gesenkt und die Lieferzeiten verringert werden.

Nicht beschränkende Ausführungsbeispiele der Erfindung sind in der Zeichnung dargestellt und werden nachfolgend beschrieben. Es zeigen, jeweils in schematischer Darstellung,
- Fig. 1: eine erste Variante eines erfindungsgemäßen Metallbandes vor dem Biegen,
- Fig. 2: eine zweite Variante eines erfindungsgemäßen Bandes vor dem Biegen,
- Fig. 3: eine dritte Variante eines ebensolchen Bandes, und
- Fig. 4: eine vierte Variante eines solchen Bandes.

Die dargestellten Metallbänder, die als Einlage für Zier- oder Dichtstreifen aus flexiblem Material, insbesondere Gummi oder Kunststoff, verwendet werden können, weisen jeweils eine Vielzahl von periodisch in Längsrichtung I des Bandes aufeinanderfolgenden Randdurchbrüchen 1, 2 auf, die jeweils von einem Rand 3, 4 des Bandes aus in Richtung auf die Mitte des Bandes geführt sind. Die von einem Rand 3 aus geführten Randdurchbrüche 1 und die von dem anderen Rand 4 aus geführten Randdurchbrüche 2 enden dabei in der Mitte des Bandes mit Abstand zueinander, so dass ein Steg 5 ohne Randdurchbrüche 1, 2 gebildet ist. In diesem Steg 5 ist eine Vielzahl von Inseldurchbrüchen 6 angeordnet, die periodisch in Längsrichtung I des Bandes aufeinanderfolgen und einen solchen Querschnitt aufweisen, dass das flexible Material beim Umhüllen des Bandes durch die Inseldurchbrüche 6 hindurchdringen kann.

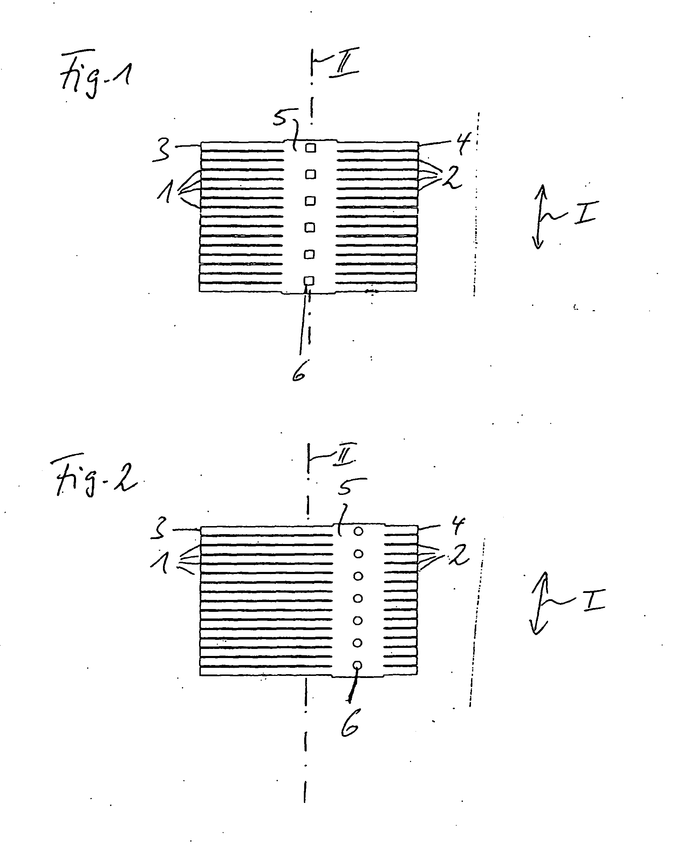

Bei der in Fig. 1 dargestellten Variante weisen die Inseldurchbrüche 6 einen quadratischen, bei der in Fig. 2 dargestellten Variante einen Kreisquerschnitt auf. Der Durchmesser der Inseldurchbrüche 6 beträgt jeweils mindestens 0,4 mm, so dass das flexible Material diese Durchbrüche 6 penetrieren kann und im Bereich des Steges 5 an dem Metallband verankert ist.

Die Inseldurchbrüche 6 sind bei diesen beiden Varianten außerdem in einer sich in Umfangsrichtung I erstreckenden Reihe hintereinander angeordnet. Der Abstand von einem Inseldurchbruch 6 zum nächsten ist dabei so gering gewählt, dass eine ausreichende Verankerung des flexiblen Materials im Bereich des Steges 5 gegeben ist. Der Abstand ist aber auch nicht zu gering gewählt, um das Band nicht zu sehr zu schwächen und nicht zu viele Durchbrüche 6 vorsehen zu müssen. Insbesondere beträgt der Abstand ca. 2 mm bis ca. 8 mm. Die Durchbrüche 6 sind außerdem bei diesen beiden Varianten durch Stanzen hergestellt.

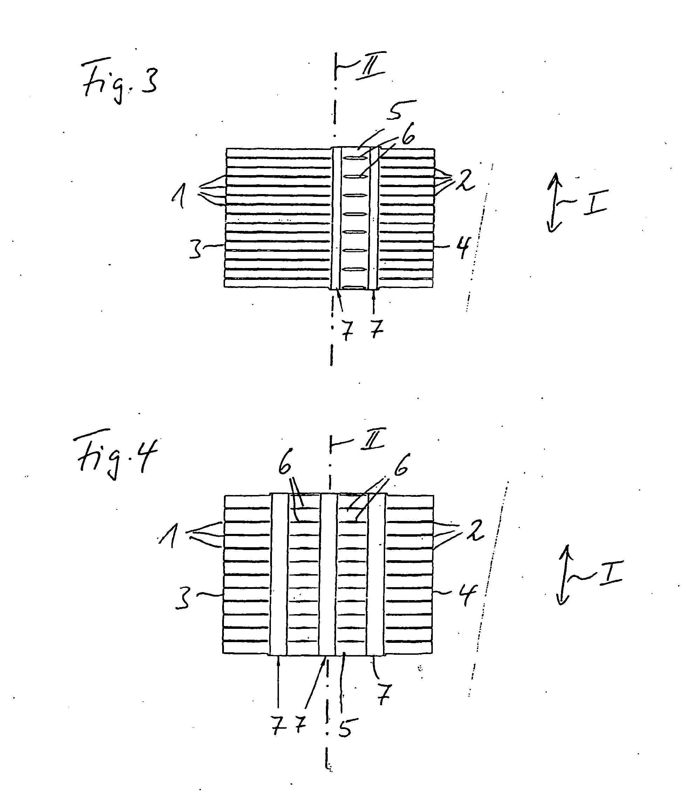

Bei der in Fig. 3 dargestellten Variante sind die Inseldurchbrüche 6 linsenförmig ausgebildet, wobei sich ihre Längsachse quer zum Metallband, also senkrecht zur Längsrichtung I des Bandes erstreckt. Die Herstellung dieser Inseldurchbrüche 6 der Fig. 3 erfolgt durch Schneiden und anschließendes Walzstrecken, wodurch beidseits der Inseldurchbrüche 6 leichte Walzspuren 7 entstehen.

Die Weite der Inseldurchbrüche in Längsrichtung I des Bandes beträgt bei der Variante von Fig. 3 mindestens 0,4 mm. Die Breite quer zur Längsrichtung I des Bandes ist entsprechend der Breite des Steges 5 gewählt.

Sie beträgt bevorzugt > 1 mm. Wie man erkennt, ist bei dieser Variante eine Reihe von linsenförmigen Inseldurchbrüchen 6 vorgesehen mit in Längsrichtung I des Bandes aufeinanderfolgenden Inseldurchbrüchen 6. Der Abstand der Inseldurchbrüche 6 in Längsrichtung I des Bandes ist dabei > 1,5 mm. Dadurch ist eine ausreichende Verankerung des flexiblen Materials im Bereich des Steges 5 gewährleistet.

Bei der in Fig. 4 dargestellten Variante sind zwei Reihen von linsenförmigen Inseldurchbrüchen 6 nebeneinander angeordnet, um den hier besonders breiten Steg 5 mit einer ausreichenden Dichte von Inseldurchbrüchen 6 zu versehen. Die linsenförmigen Inseldurchbrüche 6 sind wieder durch Schneiden und Walzstrecken hergestellt, wodurch drei Walzspuren 7 gebildet sind. Die Dimensionen der linsenförmigen Inseldurchbrüche 6 und der Abstand aufeinanderfolgender Durchbrüche 6 in Längsrichtung I des Bandes kann wie bei der Variante von Fig. 3 gewählt sein. Die beiden Reihen weisen beispielsweise einen Abstand von 1,5 mm zueinander auf.

Bei allen dargestellten Varianten kann eine ausreichende Verankerung des flexiblen Materials im Bereich des Steges 5 durch die dargestellten Inseldurchbrüche 6 erreicht werden. Alle Bänder müssen daher nicht mit einer Beschichtung aus Haftvermittler versehen werden. Sie sind dadurch kostengünstig in der Herstellung und ihre Lieferzeit kann gering gehalten werden. Wie man sieht, können die Stege 5 bei diesen Bändern außerdem symmetrisch oder asymmetrisch zur Mittellängsachse II des Bandes angeordnet sein. Es können, wie dargestellt, eine oder zwei Reihen von Inseldurchbrüchen 6 nebeneinander vorgesehen sein. Es können aber auch noch mehr Reihen vorgesehen sein, oder die Inseldurchbrüche 6 können auch anders verteilt sein, beispielsweise zickzackförmig.

### Bezugszeichenliste

- 1: Randdurchbruch
- 2: Randdurchbruch
- 3: Rand
- 4: Rand
- 5: Steg
- 6: Inseldurchbruch
- 7: Walzspur

- I: Längsrichtung
- II: Mittellängsachse

## Patentansprüche

1. Metallband als Einlage für Zier- oder Dichtstreifen aus flexiblem Material, insbesondere Gummi oder Kunststoff, welches insbesondere zu einem Profil gebogen wird, mit einer Vielzahl von insbesondere periodisch in Längsrichtung (I) des Bandes aufeinanderfolgenden Randdurchbrüchen (1, 2), die sich jeweils von einem Rand (3, 4) des Bandes aus in Richtung auf die Bandmitte erstrecken, und mindestens einem sich in Längsrichtung (I) des Bandes insbesondere kontinuierlich erstreckenden Bereich (5), in welchem keine derartigen Randdurchbrüche (1, 2) vorhanden sind, wobei in diesen Bereichen (5) eine Vielzahl von Inseldurchbrüchen (6) vorgesehen ist, die nicht in einen der beiden Ränder (3, 4) des Bandes münden und die jeweils ein solches Öffnungsmaß aufweisen, dass das flexible Material beim Umhüllen des Bandes hindurchdringen kann,
**dadurch gekennzeichnet,**
**dass** die Randdurchbrüche (1, 2) ein geringeres Öffnungsmaß in Längsrichtung des Bandes aufweisen als die Inseldurchbrüche (6).

2. Metallband nach Anspruch 1,
**dadurch gekennzeichnet,**
**dass** die Inseldurchbrüche (6) in einer solchen Dichte vorgesehen sind, dass eine ausreichende Verankerung des flexiblen Materials auch in den Bereichen (5) ohne Randdurchbrüche (1, 2) auch ohne Beschichtung mit Haftvermittler gegeben ist.

3. Metallband nach Anspruch 1 oder 2,
**dadurch gekennzeichnet,**
**dass** die Inseldurchbrüche (6) im Querschnitt kreisförmig, rechteckig, quadratisch, oval oder linsenförmig ausgebildet sind.

4. Metallband nach einem der vorhergehenden Ansprüche,
**dadurch gekennzeichnet,**
**dass** die Inseldurchbrüche (6) ausgestanzt oder geschnitten und durch Walzstrecken aufgeweitet sind.

5. Metallband einem der vorhergehenden Ansprüche,
**dadurch gekennzeichnet,**
**dass** das kleinste Öffnungsmaß der Inseldurchbrüche (6) mindestens 0,4 mm beträgt.

6. Metallband nach einem der vorhergehenden Ansprüche,
**dadurch gekennzeichnet,**
**dass** der oder die Bereiche (5) als breiter Steg ausgebildet sind.

7. Metallband nach einem der vorhergehenden Ansprüche,
**dadurch gekennzeichnet,**
**dass** ein, zwei oder mehr Reihen von Inseldurchbrüchen (6) nebeneinander angeordnet sind.

8. Metallband nach einem der vorhergehenden Ansprüche,
**dadurch gekennzeichnet,**
**dass** der oder die Bereiche (5) ohne Randdurchbrüche (1, 2) symmetrisch oder asymmetrisch zur Mittellängsachse (II) des Bandes angeordnet sind.

9. Metallband nach einem der vorhergehenden Ansprüche,
**dadurch gekennzeichnet,**
**dass** das Metallband in das flexible Material einextrudiert ist.

10. Metallband nach einem der vorhergehenden Ansprüche,
**dadurch gekennzeichnet,**
**dass** das Band keine Beschichtung mit einem Haftvermittler aufweist.

## Claims

1. A metal band as an insert for trim strips or sealing strips made of flexible material, in particular rubber or plastic, which is in particular bent to form a section, having a plurality of marginal breakthroughs (1, 2) which in particular follow one another periodically in the longitudinal direction (I) of the band and which each extend from an edge(3, 4) of the band in the direction of the band centre, and having at least one region (5) which extends, in particular continuously, in the longitudinal direction (I) of the band and in which no such marginal breakthroughs (1, 2) are present, wherein a plurality of isolated openings (6) are provided in these regions (5) and do not open into one of the two edges (3, 4) of the band and each have such an opening dimension that the flexible material can pass through on the encasing of the band,
**characterised in that**
the marginal breakthroughs (1, 2) have a smaller opening dimension in the longitudinal direction of the band than the isolated openings (6).

2. A metal band in accordance with claim 1, **characterised in that** the isolated openings (6) are provided in such a density that a sufficient anchorage of the flexible material is also present in the regions (5) without marginal breakthroughs (1, 2), also without a coating with an adhesion promoter.

3. A metal band in accordance with claim 1 or claim 2, **characterised in that** the isolated openings (6) are made circular, rectangular, square, oval or lenticular in cross-section.

4. A metal band in accordance with any one of the preceding claims, **characterised in that** the isolated openings (6) are punched out or cut and expanded by roll stretching.

5. A metal band in accordance with any one of the preceding claims, **characterised in that** the smallest opening dimension of the isolated openings (6) amounts to at least 0.4 mm.

6. A metal band in accordance with any one of the preceding claims, **characterised in that** the region or regions (5) is/are made as a wide web.

7. A metal band in accordance with any one of the preceding claims, **characterised in that** one, two or more rows of isolated openings (6) are arranged next to one another.

8. A metal band in accordance with any one of the preceding claims, **characterised in that** the region or regions (5) is/are arranged without marginal breakthroughs (1, 2) symmetrically or asymmetrically to the central longitudinal axis (II) of the band.

9. A metal band in accordance with any one of the preceding claims, **characterised in that** the metal band is extruded into the flexible material.

10. A metal band in accordance with any one of the preceding claims, **characterised in that** the band does not have a coating with an adhesion promoter.

## Revendications

1. Ruban métallique servant d'insert pour bande d'enjolivement ou d'étanchéité en matériau flexible, en particulier en caoutchouc ou en matière plastique, lequel est plié en particulier pour former un profil, comportant une multitude de percées marginales (1, 2) successives en particulier périodiquement en direction longitudinale (I) du ruban, lesquelles s'étendent chacune depuis un bord (3, 4) du ruban en direction du milieu du ruban, et comportant au moins une zone (5) s'étendant en particulier en continu en direction longitudinale (I) du ruban, dans laquelle il n'y a aucune telle percée marginale (1, 2), et dans ces zones (5) sont prévues une multitude de percées en îlots (6) qui ne débouchent pas dans un des deux bords (3, 4) du ruban et qui présentent chacune une dimension d'ouverture telle que le matériau flexible peut pénétrer lors du gainage du ruban,
**caractérisé en ce que**
les percées marginales (1, 2) présentent une dimension d'ouverture plus faible en direction longitudinale du ruban que les percées en îlots (6).

2. Ruban métallique selon la revendication 1,
**caractérisé en ce que**
les percées en îlots (6) sont prévues dans une telle densité que l'on obtient un ancrage suffisant du matériau flexible même dans les zones (5) sans percées marginales (1, 2), même sans revêtement avec un agent adhésif.

3. Ruban métallique selon la revendication 1 ou 2,
**caractérisé en ce que**
les percées en îlots (6) sont réalisées avec une section transversale circulaire, rectangulaire, carrée, ovale ou en forme de lentille.

4. Ruban métallique selon l'une quelconque des revendications précédentes,
**caractérisé en ce que**
les percées en îlots (6) sont poinçonnées ou découpées et évasées par extension par laminage.

5. Ruban métallique selon l'une quelconque des revendications précédentes,
**caractérisé en ce que**
la dimension d'ouverture la plus petite des percées en îlots (6) est d'au moins 0,4 mm.

6. Ruban métallique selon l'une quelconque des revendications précédentes,
**caractérisé en ce que**
la ou les zone(s) (5) est/sont réalisée(s) sous forme d'entretoise large.

7. Ruban métallique selon l'une quelconque des revendications précédentes,
**caractérisé en ce que**
une, deux ou plusieurs rangées de percées en îlots (6) sont agencées les unes à côté des autres.

8. Ruban métallique selon l'une quelconque des revendications précédentes,
**caractérisé en ce que**
la ou les zone(s) (5) sans percées marginales (1, 2) est/sont agencée(s) symétriquement ou asymétriquement par rapport à l'axe longitudinal médian (II) du ruban.

9. Ruban métallique selon l'une quelconque des revendications précédentes,
**caractérisé en ce que**
le ruban métallique est intégré par extrusion dans le matériau flexible.

10. Ruban métallique selon l'une quelconque des revendications précédentes,
**caractérisé en ce que**
le ruban ne présente aucun revêtement avec un agent adhésif.
